# EUROPEAN PATENT APPLICATION

(11) **EP 4 656 454 A1**
(43) Date of publication of application: **03.12.2025**
(21) Application number: 24179247.2
(22) Date of filing: 31.05.2024
(51) Int. Cl.: B60N 2/14, B60N 2/75, B60N 3/00

(54) **ROTATABLE PLATFORM FOR AN INTERIOR OF A VEHICLE, INTERIOR ASSEMBLY FOR A VEHICLE, AND VEHICLE**

(71) Applicant: Volvo Car Corporation, 405 31 Göteborg (SE)
(72) Inventor: TILLEMA, Sophie, 40531 Göteborg (SE); ALLIOT, Clément, 40531 Göteborg (SE); PALM, Niklas, 40531 Göteborg (SE)
(74) Representative: Maiwald GmbH

(57) **Abstract**

The disclosure relates to a rotatable platform (16) for an interior of a vehicle (10). The rotatable platform (16) comprises a first mounting interface configured for mounting a seat device (18) on the platform (16) and a second mounting interface configured for mounting a console device (22) on the platform (16). Additionally, an interior assembly (12) for a vehicle (10) is described. The interior assembly (12) comprises such a rotatable platform (16) forming a portion of a floor (26) of a vehicle interior. Furthermore, a vehicle (10) that comprises such a rotatable platform (16) and/or such an interior assembly (12) is presented.

## Description

### TECHNICAL FIELD

The present disclosure relates to a rotatable platform for an interior of a vehicle.

Moreover, the present disclosure is directed to an interior assembly for a vehicle.

Additionally, the present disclosure relates to a vehicle.

### BACKGROUND ART

The ongoing development in the field of autonomous driving opens use cases of vehicles, such as passenger cars, in which a driver of the vehicle at least temporarily is not needed to control the vehicle. Thus, the driver may do an activity different from driving. In such a situation, the driver may wish to assume a position different from a standard driving position, e.g. a more relaxed or more communicative position.

### SUMMARY

It is therefore an objective of the present disclosure to improve the functionality and the flexibility of the interior of the vehicle.

The problem is at least partially solved or alleviated by the subject matter of the independent claims of the present disclosure, wherein further examples are incorporated in the dependent claims.

According to a first aspect, there is provided a rotatable platform for an interior of a vehicle. The rotatable platform comprises a first mounting interface configured for mounting a seat device on the platform and a second mounting interface configured for mounting a console device on the platform. In this context, the rotatable platform may be understood as a platform that rotates around an axis of rotation. The rotatable platform may be substantially circular. Moreover, the rotatable platform may comprise a substantially flat, e.g. disk-shaped, platform body on which the first mounting interface and the second mounting interface are SE:TOP provided. The axis of rotation may be located in the center of the rotatable platform and may extend substantially vertically if the rotatable platform is used. Thus, the axis of rotation may as well be a center axis of the platform body. The first mounting interface may comprise a mechanical connection interface to which the seat device may be mechanically fixated. Thus, when the rotatable platform is rotated, the seat device also rotates. This means that the seat device does not need an individual swivel mechanism or rotation mechanism. In other words, the seat device is rotating because the rotatable platform on which the seat device is mounted rotates. This has the effect that an interior of a vehicle in which the rotatable platform is used becomes more flexible in the sense that an arrangement of a seat device is adaptable to the needs of a user. This also improves the comfort of the user. Accordingly, the second mounting interface may comprise a mechanical connection interface to which the console device may be mechanically fixated. Thus, when the rotatable platform is rotated, also the console device rotates. This means that the console device does not need an individual swivel mechanism or rotation mechanism. In other words, the console device is rotating because the rotatable platform on which the console device is mounted rotates. This has the effect that the functionality and the flexibility of the interior of the vehicle is improved. Due to the fact that both the first mounting interface and the second mounting interface keep their relative position on the rotatable platform when the rotatable platform is rotated, a relative position of a console device mounted on the platform and a seat device mounted on the platform is also kept. Thus, a user is able to further use the console device if the platform is rotated. In other words, it is not necessary to rotate the seat device and the console device separately.

According to an example, the rotatable platform may further comprise a third mounting interface configured for mounting a further seat device on the platform. Thus, a total of two seat devices may be mounted on the platform. In this context, the first mounting interface and the third mounting interface may have the same orientation. This means that a seat device mounted on the first mounting interface and a seat device mounted on the third mounting interface may have the same orientation such that users sitting on these seat devices have the same orientation.

In an example, the second mounting interface may be arranged between the first mounting interface and the third mounting interface. In such a configuration, the console device may be mounted between two seat devices such that the console device may be used by both a user of a seat device mounted on the first mounting interface and a user of a seat device mounted on the third mounting interface.

According to an example, the platform is rotatable about at least 180 degrees. The rotatable platform may be rotatable clockwise or counter-clockwise around the axis of rotation. This has the effect that the functionality and the flexibility of the interior is further improved because when the platform is rotated by at least 180 degrees, the seat device and the console device are also rotated by at least 180 degrees. Thus, the user in the vehicle is able to turn the seat device and the console device, e.g. from a forward orientation into a rearward orientation or vice versa. This enhances the flexibility of use of an interior of a vehicle equipped with such a rotatable platform.

According to an example, the rotatable platform further comprises an electric drive unit for selectively rotating the platform. Thus, the electric drive unit may drive the rotatable platform so that the rotatable platform rotates around the axis of rotation. In other words, a user does not need to rotate the platform manually. This has the effect that rotating at least one seat device and/or a console device in the vehicle are facilitated. This improves the comfort of the user.

In an example, the electric drive unit may comprise a belt and a pulley system. Thus, the rotatable platform may be rotated by operating the belt and pulley system. Using such a system has the effect that the rotatable platform may be rotated in a smooth and reliable manner. Furthermore, a belt and pulley system only emits a comparatively low level of noise during operation. Moreover, a belt and pulley system may be designed in a compact manner.

According to an example, the rotatable platform further comprises a platform locking mechanism configured for selectively blocking a rotation of the platform. Such a locking mechanism may be used to make an activation of the rotatable platform depend on an operational state of the vehicle. Operational states of the vehicle may, for example, be an autonomous driving state, a manual driving state, or a parking state. In this context, the autonomous driving state may be seen as a driving mode in which the vehicle drives autonomously. The manual driving state may be seen as a driving mode in which the user manually drives the vehicle. The parking state may be seen as a mode in which the vehicle is standing still without the possibility to imminently start driving. The parking mode may be active when refueling and/or charging the vehicle. In this example, the platform locking mechanism may only be activated if the vehicle is in the manual driving state. This means that the rotatable platform cannot be rotated if the vehicle is in the manual driving state. In contrast thereto, the platform locking mechanism may be deactivated in the autonomous driving state or in the parking state. Thus, the rotatable platform may be rotated if the vehicle is in the autonomous driving state or in the parking state. Altogether, operational safety of the rotatable platform, a vehicle equipped therewith, and the users is enhanced.

In other words, a method for operating a rotatable platform for an interior of a vehicle may be provided. The rotatable platform may comprise a first mounting interface configured for mounting a seat device on the platform and a second mounting interface configured for mounting a console device on the platform. The method may comprise obtaining data indicative of an operational state of the vehicle. Moreover, the method may comprise evaluating whether the operational state of the vehicle corresponds to an operational state allowing rotation of the rotatable platform or to an operational state not allowing rotation of the rotatable platform. This may be done based on the data and on a list at least comprising the operational states allowing rotation of the rotatable platform or operational states not allowing rotation of the rotatable platform. In a case in which the list only comprises operational states allowing rotation of the rotatable platform, all other operational states may be considered not to allow rotation of the rotatable platform. In a case in which the list only comprises operational states not allowing rotation of the rotatable platform, all other operational states may be considered to allow rotation of the rotatable platform.

According to a second aspect, there is provided an interior assembly for a vehicle. The interior assembly comprises a rotatable platform according to the first aspect. The rotatable platform forms a portion of a floor of a vehicle interior. The rotatable platform may be integrated into the floor of the vehicle interior. This means that the portion of the floor of the vehicle interior which is formed by the rotatable platform is complemented by other portions of the floor of the vehicle interior. These other portions may be non-movable. The rotatable platform may form a portion of the floor of the vehicle interior such that an upper side of the rotatable platform and an upper side of the other portions of the floor are arranged in the same plane. This means that no step or difference in level exists between the rotatable platform and the remaining portions of the floor of the vehicle interior. Alternatively, the rotatable platform may form a portion of the floor of the vehicle interior which is elevated or recessed with respect to the remaining portions of the floor. This means that a small step exists between the portion of the floor formed by the rotatable platform and the remaining portions of the floor. In both cases, the rotatable platform enhances the flexibility of the vehicle interior. This has the effect that the comfort of a user is improved.

According to an example, at least one seat device is mounted on the platform via the first mounting interface. Additionally or alternatively, at least one console device is mounted on the platform via the second mounting interface. It is to be noted that at least one seat device means one seat device or a plurality of seat devices. It is also possible that two seat devices may be mounted on the rotatable platform. The seat device may be mechanically fixated on the platform. Thus, when the rotatable platform is rotated, the seat device also rotates. This means that the seat device does not need an individual swivel mechanism or rotation mechanism. In other words, the seat device is rotating because the rotatable platform on which the seat device is mounted rotates. This has the effect that the comfort of a user is improved. The console device may be a center console and/or an arm rest. The console device may be mechanically fixated on the platform. Thus, when the rotatable platform is rotated, the console device also rotates. This means that the console device does not need an individual swivel mechanism or rotation mechanism. In other words, the console device is rotating because the rotatable platform on which the console device is mounted on rotates. This has the effect that the functionality and the flexibility of the interior of the vehicle is improved. This is because the user is able to further use the console device when the seat is rotated. In other words, it is not necessary to rotate the seat device and the console device separately.

According to an example, at least one display device is connected to the platform. Consequently, also the display device will rotate together with the rotatable platform and, thus, together with the at least one seat device mounted on the platform. This has the advantage that a relative position of the display with respect to the seat device may be kept even though the rotatable platform is rotated. This has the effect that the functionality and the flexibility of the interior of the vehicle is improved. Further, the comfort of a user is improved.

In an example, the display device may form a dashboard of the vehicle and/or an instrument panel of the vehicle. Thus, the display may be configured to display an array of instruments, gauges, etc., configured to show a condition or performance of the vehicle. Optionally, the display device may comprise switches, e.g. touch buttons, for controlling the vehicle. Thus, the display device may form an essential component of the vehicle if the vehicle is driven manually. However, due to the flexibility provided by the rotatable platform, the display device may as well be used for different purposes in case manual driving is not required, e.g. during autonomous driving or during parking.

In an example, the display device may comprise a user interface for the rotatable platform, e.g. an electric drive unit of the rotatable platform. Thus, the rotatable platform, e.g. the electric drive unit of the rotatable platform, may be controlled via the display device. This is comfortable for a user, especially due to the fact that a relative position of the display device and the seat device may be kept constant even though the rotatable platform is rotated.

According to an example, the display device is mounted on the console device. In other words, the display device may be mechanically fixated on the console device. Consequently, the display device may be reliably mounted in the interior of the vehicle. Additionally, the display device may be located in a space that is easily accessible by a user. This means that the display device rotates together with the console device. This has the effect that the functionality and the flexibility of the interior of the vehicle is improved. Further, the comfort of a user is improved.

According to an example, the display device is translatorily movable relative to the console device along a first direction. The first direction extends substantially in parallel to a principal extension of the console device. Additionally or alternatively, the display device is translatorily movable relative to the console device along a second direction. The second direction extends substantially transversely to a principal extension of the console device. Additionally or alternatively, at least a portion of the display device is rotatably movable relative to the console device about a first axis of rotation. The first axis of rotation extends substantially vertically if the interior assembly is used. Additionally or alternatively, at least a portion of the display device is rotatably movable relative to the console device about a second axis of rotation. The second axis of rotation extends substantially transversely to a principal extension of the console device. Additionally or alternatively, at least a portion of the display device is rotatably movable relative to the console device about a third axis of rotation. The third axis of rotation extends substantially in parallel to a principal extension of the console device. In this context, the translatory movement can be considered as a linear movement. The linear movement may be along a straight line. As far as the rotational movability of at least a portion of the display device is concerned, two alternatives are covered. According to a first alternative, the display device as a whole may be rotated. According to a second alternative, only a portion of the display device may be rotated. The movability of the display device, be it translatory and/or rotational, has the effect that the functionality and the flexibility of the interior of the vehicle is improved. It is noted that the movability is provided relative to the console device. Altogether, the comfort of a user is further improved.

According to an example, in a driving configuration, at least a portion of the display device has a component of extension in a vertical direction. Additionally or alternatively, in a table configuration, the display device is arranged in parallel to a horizontal plane. Thus, the display device may assume a driving configuration and a table configuration. In the table configuration the display device as a whole is flat such that it can be used as a table. In contrast thereto, in the driving configuration at least a portion is oriented upright or inclined while having an upright component. In other words, when using the table configuration as a basis, at least a portion of the display device is erected. It is to be noted that the driving configuration may be considered as a configuration, wherein the interior assembly is in a state, that allows manual driving of the vehicle. Thus, in the driving configuration, the display device may be used to show driver information to the user. Driver information may be vehicle speed, battery power, maps, and/or information relating to a vehicle condition. In the table configuration, the display device may be used to show entertaining content to the user. Entertaining content may correspond to applications and/or to widgets including audio and/or video entertainment. This means that the user is able to choose between a driving configuration and a table configuration. This has the effect that the comfort of a user is improved. Furthermore, the functionality and the flexibility of the interior of the vehicle is improved.

According to an example, the display device comprises at least two display device portions. The at least two display device portions are connected via a hinge. In other words, the display may be foldable. Consequently, an orientation of one display device portion may be chosen independently from an orientation of the respective other display device portion. This has the effect that the comfort of a user is improved. Furthermore, the functionality and the flexibility of the interior of the vehicle is improved.

According to an example, the display device may comprise a support portion. The support portion may be configured to mechanically support the display device portion configured for displaying content. Thus, the support portion may be considered as a mechanical or structural basis that allow the movability of the display. Using a support portion allows to reliably provide this movability and reliably support the display device on the platform, e.g. via the console.

According to an example, the interior assembly further comprises a display device locking mechanism configured for selectively blocking a movement of the display device. Such a locking mechanism may be used to make a movement of the display device depend on an operational state of the vehicle. Operational states of the vehicle may, for example, be an autonomous driving state, a manual driving state, or a parking state. In this context, the autonomous driving state may be seen as a driving mode in which the vehicle drives autonomously. The manual driving state may be seen as a driving mode in which the user manually drives the vehicle. The parking state may be seen as a mode in which the vehicle is standing still without the possibility to imminently start driving. The parking mode may be active when refueling and/or charging the vehicle. In this example, the display device locking mechanism may only be activated if the vehicle is in the manual driving state. This means that the movability of the display device is at least partially locked if the vehicle is in the manual driving state. In contrast thereto, the display device locking mechanism may be deactivated in the autonomous driving state or in the parking state. Thus, the full movability of the display device may be available if the vehicle is in the autonomous driving state or in the parking state. Altogether, operational safety of the display device, a vehicle equipped therewith and the users is enhanced.

According to an example, the display device comprises a touch screen. This means that the display may be used as an information output device and as an input device. Such a display device is very flexible both in outputting information and in inputting information This has the effect that a number of hardware buttons may be reduced. In a limit case, hardware buttons may be completely eliminated.

According to an example, the interior assembly further comprises a steering device mounted on the console device and/or on the display device. In this context, the steering device may be understood as a device suitable for manually manipulating a driving direction of a vehicle, i.e. as a device for steering the vehicle. The steering device may be a steering wheel, a steering yoke or a steering joystick. The steering device may be movable between a stowing position and a use position. The stowing position may be assumed when the vehicle is in the autonomous driving mode. This means that the steering device may be selectively moved away from the user. This has the effect that the comfort of a user is improved. The use position may be assumed when the vehicle is in manual driving mode. This means that the steering device may be selectively moved towards the user so that the user may interact with the steering device. This has the effect that the functionality and the flexibility of the interior of the vehicle is improved.

According to a third aspect, there is provided a vehicle. The vehicle comprises a rotatable platform of the first aspect and/or an interior assembly of the second aspect. As has been mentioned before, using such a rotatable platform and/or such an interior assembly has the effect that the comfort of a user is improved. Additionally, the functionality and the flexibility of the interior of the vehicle is improved.

It should be noted that the above examples may be combined with each other irrespective of the aspect involved. Accordingly, features, effects and advantages explained in connection with one of the rotatable platform according to the present disclosure, the interior assembly according to the present disclosure and the vehicle according to the present disclosure also apply to the respective other ones of the rotatable platform according to the present disclosure, the interior assembly according to the present disclosure and the vehicle according to the present disclosure and vice versa.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising an interior assembly according to the present disclosure oriented in a forward direction, wherein the interior assembly comprises a rotatable platform according to the present disclosure,
- Figure 2: shows the vehicle of Figure 1 from another perspective,
- Figure 3: shows the vehicle of Figures 1 and 2, wherein the interior assembly is oriented in a rearward direction,
- Figure 4: shows a detail of the vehicle of Figures 1 to 3, wherein the interior assembly is in a different configuration,
- Figure 5: shows another detail of the vehicle of Figures 1 to 3, wherein the interior assembly is in another configuration,
- Figure 6: shows a further detail of the vehicle of Figures 1 to 3, wherein the interior assembly is in still another configuration,
- Figure 7: shows still a further detail of the vehicle of Figures 1 to 3, wherein the interior assembly is in still another configuration,
- Figure 8: shows a portion of the interior assembly of the vehicle of Figures 1 to 3 in a separate perspective view,
- Figure 9: schematically shows a display device and a console device of the interior assembly of Figure 8 from a first perspective,
- Figure 10: schematically shows the display device and the console device of Figure 9 from another perspective,
- Figure 11: schematically shows a display device locking mechanism for selectively blocking a movement of the display device,
- Figure 12: shows the display device of the interior assembly of Figure 8 in a separate perspective view, wherein the display devices is in a table configuration,
- Figure 13: shows a sectional view of the display device of Figure 12 in sectional plane XIII of Figure 12,
- Figure 14: shows the display device of the interior assembly of Figure 8 in a separate perspective view, wherein the display devices is in a driving configuration,
- Figure 15: shows the display device of Figure 14 from another perspective,
- Figure 16: shows a sectional view of the display device of Figure 15 in sectional plane XVI of Figure 15,
- Figure 17: shows an electric drive unit for the rotatable platform of the vehicle of Figures 1 to 3,
- Figure 18: shows the electric drive unit of Figure 17 along a direction XVIII in Figure 17, and
- Figure 19: shows the electric drive unit of Figure 17 along a direction XIX in Figure 17,

### DETAILED DESCRIPTION

The Figures are merely schematic representations and serve only to illustrate examples of the disclosure. Identical or equivalent elements are in principle provided with the same reference signs.

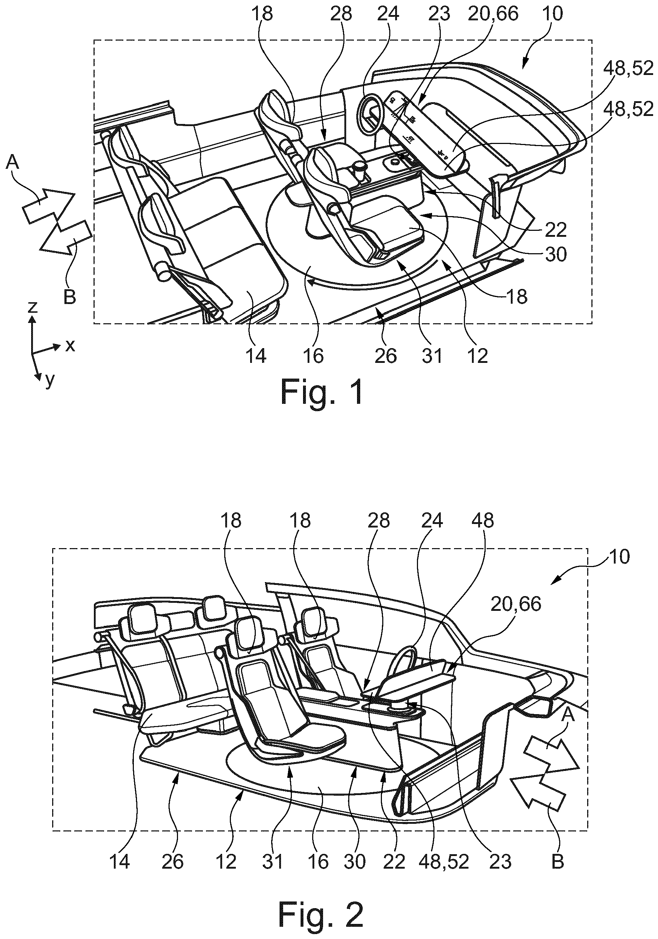

Figures 1 and 2 show a vehicle 10 comprising an interior.

An interior assembly 12 and a seating bench 14 are arranged in the interior of the vehicle 10.

The interior assembly 12 comprises a rotatable platform 16, two seat devices 18, a display device 20, a console device 22, and a steering device 24.

The rotatable platform 16 forms a portion of a floor 26 of the interior of the vehicle 10. In the present example, the vehicle 10 has an even floor in which the rotatable platform is integrated. This means that there is no step between the portions of the floor formed by the rotatable platform and the remaining portions of the floor.

In the present example, the rotatable platform 16 has a circular shape.

Moreover, the rotatable platform 16 is configured to rotate. The rotatability of the rotatable platform 16 is indicated by an arrow extending along an outer circumference of the rotatable platform 16.

In the present example, the rotatable platform 16 is rotatable about 180 degrees. Thus, by rotating the rotatable platform 16, the interior assembly can be moved from the orientation in the forward direction A into the orientation in the rearward direction B and vice versa.

The seating bench 14 has a fixed position in the interior of the vehicle 10.

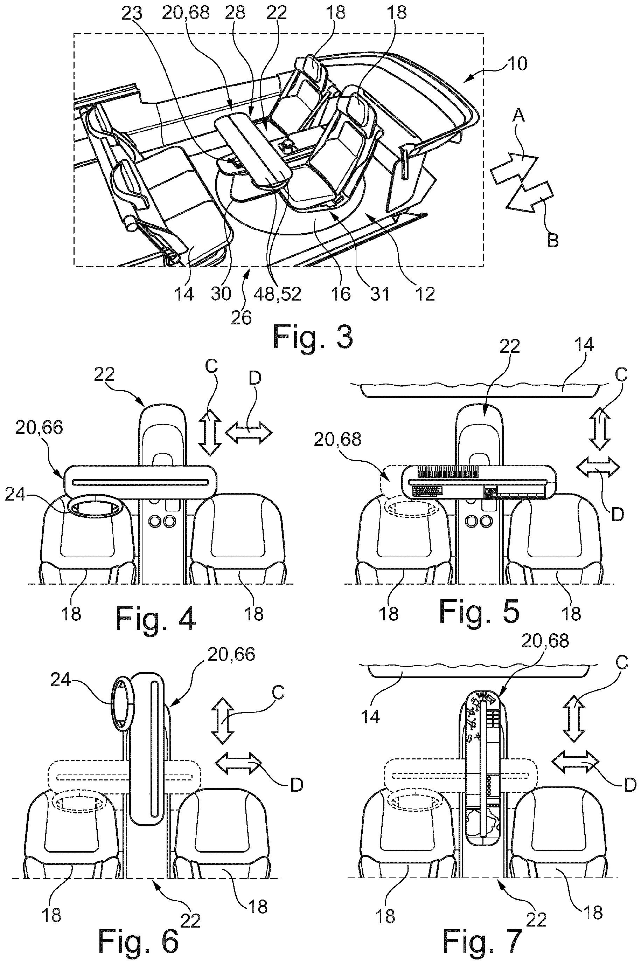

In Figures 1 and 2, the interior assembly 12 is oriented in the forward direction A. In Figure 3, the interior assembly 12 is oriented in the rearward direction B.

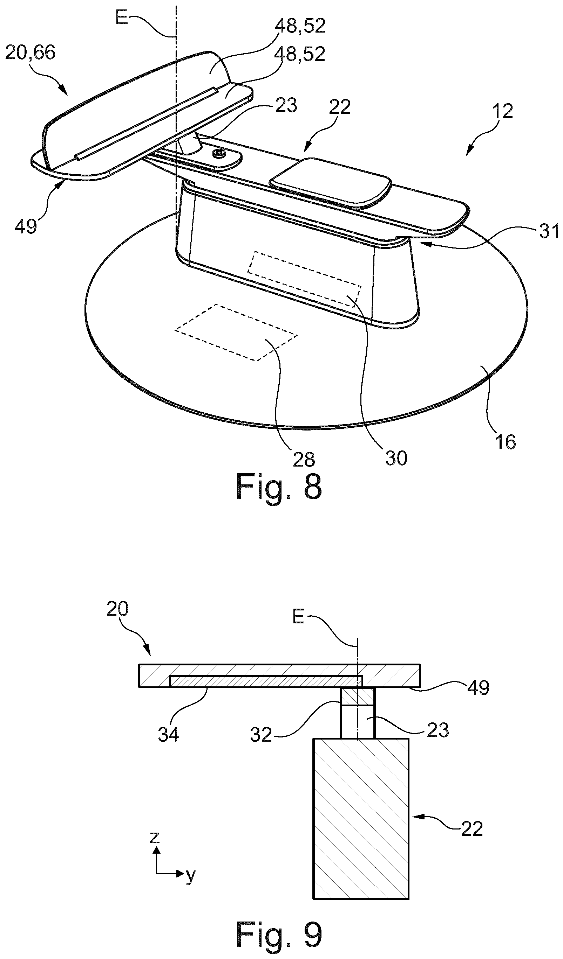

The rotatable platform 16 comprises a first mounting interface 28 on which a first one of the seating devices 18 is fixated (see also Figure 8). Moreover, the rotatable platform 16 comprises a second mounting interface 30 on which the console device 22 is fixated.

Additionally, the rotatable platform 16 comprises a third mounting interface 31 on which a second one of the seating devices 18 is fixated.

The first mounting interface 28, the second mounting interface 30, and the third mounting interface 31 are substantially arranged along a diameter of the rotatable platform 16 and are centered on the diameter.

Moreover, the second mounting interface 30 is arranged between the first mounting interface 28 and the third mounting interface 31. Due to this configuration, the console device 22 is arranged between the two seating devices 18.

Consequently, the console device 22 may form a center console of the vehicle 10.

The console device 22 also comprises a storage compartment which is accessible from both the seating devices 18. For illustrative purposes only, a coffee cup is represented in this storage compartment. Moreover, the console device 22 comprises a central user input device which is represented as a substantially cylindrical push-and-turn button.

The display device 20 is mounted on the console device via a support arm 23 as will be explained in more detail further below.

The display device 20 comprises two display device portions 48 which are connected via a hinge 50. Both the display device portions 48 are supported on a support portion 49 of the display device 20.

Furthermore, in the present example, the steering device 24 is formed as a stowable steering wheel and is mounted on the display device 20 (see Figures 1, 2, and 4).

The interior assembly 12 is very flexible and, thus, can assume different configurations. This will be explained in the following with reference to Figures 3 to 7.

As has been explained before, in the configuration of Figures 1 and 2, the interior assembly 12 is oriented in a forward direction. Moreover, the display device is in a driving configuration. This means that, in the present example, one of the display device portions 48 is erected with respect to a horizontal plane. In the specific case of the present example, this applies to the display device portion 48 which is arranged remotely from the seating devices 18. The other display device portion 48 is oriented in parallel to a horizontal plane.

Moreover, in the configuration of Figures 1 and 2, the display device is arranged eccentrically. This means that a portion of the display device 20 arranged in front of one of the seating devices 18, in the present case the driver seat, is larger than a portion of the display device 20 arranged in front of the respective other one of the seating devices 18, in the present example the front passenger seat.

Additionally, the steering device 24 is in a use configuration, i.e. is arranged such that it can be manipulated by a driver sitting on the adjacent seating device 18.

This configuration can be used for manually driving the vehicle 10.

A detail of the configuration of Figures 1 and 2 is represented in a bird's view in Figure 4.

In the configuration of Figure 3, the rotatable platform 16 has been rotated by 180 degrees such that the seating devices 18 are oriented in a rearward direction. Thus, the seating devices 18 and the seating bench 14 are arranged in a face-to-face configuration.

Moreover, the steering device 24 is stowed such that it cannot be used anymore and such that it liberates space for the diver sitting on the adjacent seating device 18.

Additionally, the display device 20 assumes a table configuration. This means that, using the hinge, both the display device portions 48 are arranged in parallel to a horizontal plane.

Furthermore, the display device 20 is centered with respect to a width direction of the vehicle 10. This means that the portion of the display device 20 located in front of one of the seating devices 18 has approximately the same length as the portion of the display device 20 located in front of the respective other one of the seating devices 18.

This has the advantage that both the driver and a front seat passenger may use the display device 20 at similar ergonomic.

A detail of the configuration of Figure 3 is represented in a bird's view in Figure 5. In this figure, the use configuration of the steering means 24 and the lateral position of the display device 20 as used in the configuration of Figures 1 and 2 are illustrated in dashed lines.

Figure 6 shows a configuration in which the rotatable platform 16 is again oriented into the forward direction as in the configuration of Figures 1 and 2. However, as compared to the configurations of these figures, the display device 20 has been turned by approximately 90 degrees about a substantially vertical axis of rotation. The vertical axis is oriented in parallel to a height direction z of the vehicle 10. This configuration enlarges a movement space for both the driver and the front seat passenger. For illustrative purposes, the configuration of Figure 4 is represented in Figure 6 in dotted lines.

Figure 7 shows a configuration which is similar to the configuration of Figure 6, however, now the rotatable platform 16 has been turned such that it is oriented in a rearward direction.

The display device 20 is in the same orientation as in the configuration of Figure 6. This means that the display device extends substantially along a longitudinal direction of the vehicle 10.

Moreover, the display device 20 is in the table configuration and the steering means 24 is stowed.

It is noted that the above-described movability or adjustability of the display device 20 and/or the steering device 24 also is a safety feature. This is due to the fact that in the event of a crash, the display device 20 and/or the steering device 24 may be moved in a direction away from a passenger of the vehicle. This alleviates a potential impact on the passenger resulting from a contact with the display device 20 and/or the steering device 24. This especially applies to the rotatability of the display device 20 about the substantially vertical axis of rotations.

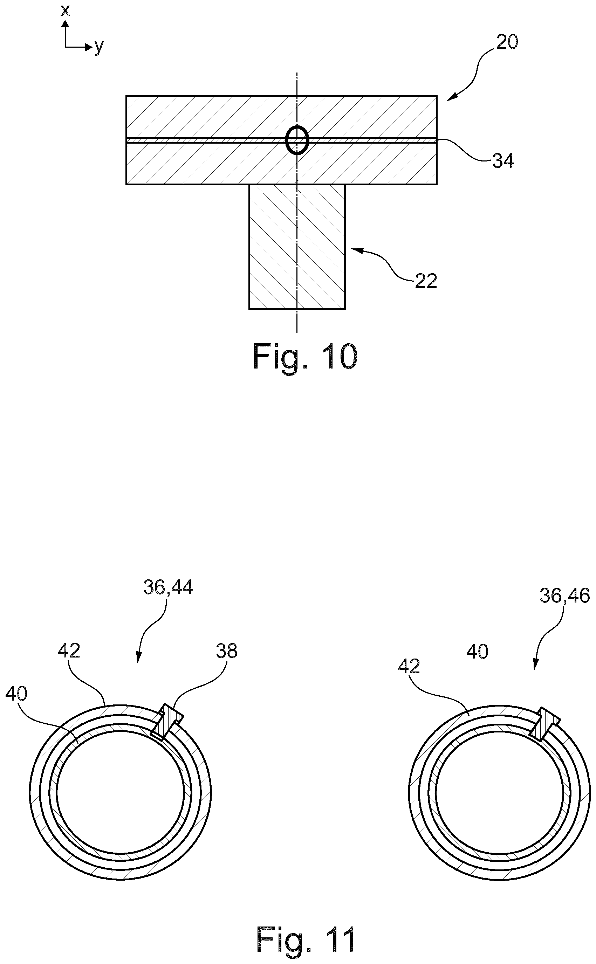

In the following, the movability of the display device 20 with respect to the console device 22 will be explained in more detail with reference to Figures 9 and 10.

The display device 20 is translatorily movable relative to the console device 22 along a first direction C. The first direction C extends substantially parallel to a principal extension of the console device 22 and corresponds to a longitudinal direction x of the vehicle 10.

This movability is allowed due to the fact that the display device 20 is connected to the support arm 23 via a linear sliding mechanism 34.

In the present example, the movability along the first direction C is only available if the display device is oriented in parallel to a principal extension of the console device 22, i.e. along the longitudinal direction x of the vehicle 10.

The display device 20 is also translatorily movable relative to the console device 22 along a second direction D. The second direction D extends substantially transversely to a principal extension of the console device 22 and, thus, along a width direction y of the vehicle 10.

This movability is allowed due to the fact that the display device 20 is connected to the support arm 23 via the linear sliding mechanism 34.

In the present example, the movability along the second direction D is only available if the display device is oriented transversely to the principal extension of the console device 22, i.e. along the width direction y of the vehicle 10.

Moreover, the display device 20 is rotatably movable relative to the console device 22 about a first axis of rotation E. More precisely, the display device 20 is rotatably supported on the support arm 23 via a rotating mechanism. The first axis of rotation E extends substantially vertically (see Figures 8 and 9).

The interior assembly 24 also comprises a display device locking mechanism 36 for selectively blocking a movement of the display device 20 (see Figure 11).

The display device locking mechanism 36 comprises a lever 38 or pin, an inner tube 40 and an outer tube 42. The inner tube 40 has a smaller diameter than the outer tube 42 and is at least partially arranged inside the outer tube 42. The lever 38 is mechanically connected to the outer tube 42 and may assume a locking position (cf. right half of Figure 11) and a release position (cf. left half of Figure 11). In the locking position, the lever 38 engages a recess provided in the inner tube such that the inner tube 40 cannot rotate with respect to the outer tube 42. In the release position, the lever 38 does not engage the recess such that the inner tube 40 and the outer tube 42 may turn with respect to one another.

It is understood that in this context, the inner tube 40 and the outer tube 42 may form part of the rotating mechanism 32.

A similar display device locking mechanism 36 may be used in connection with the sliding mechanism 34.

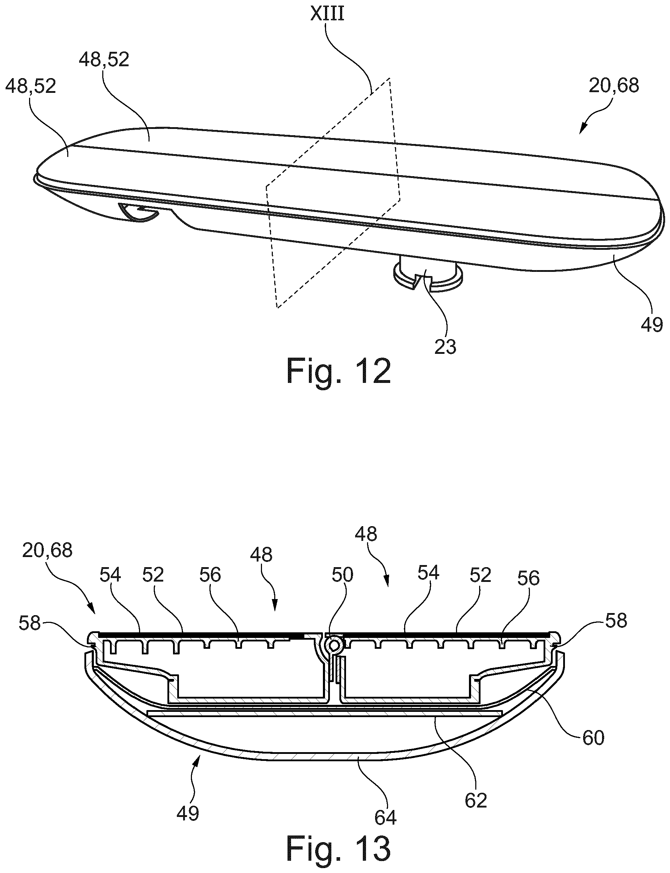

Figures 12 to 16 show the display device 20 in more detail.

As has been mentioned before, the display device 20 comprises two display device portions 48 and a support portion 49. The two display device portions 48 are connected via a hinge 50. Moreover, one of the display device portions 48 is fixedly connected to the support portion 49.

In the present example, the hinge 50 is a butt hinge. Alternatively, the hinge 50 may be a swan neck hinge.

Each of the display device portions 48 comprises a touch screen 52. Thus, both the display device portions 48 may be used as information output devices and as information input devices.

The touch screens 52 are supported on a heat sink unit 56. The heat sink unit 56 is configured to dissipate heat generated during operation of the associated touch screen 52.

Moreover, each display device portion 48 comprises a back cover 58 covering a rear side of the touch screen 52 and the heat sink unit 56.

The support portion 49 essentially comprises three parts. An outer cover 64 covers an outside of the support portion 49. An inner cover 60 and a base plate 62 are arranged inside the outer cover 64 and support the display device portions 48.

As has been explained before, the display device 20 may be in a driving configuration 66 or in a table configuration 68. In the table configuration 68, the display device 20, i.e. both display device portions 48, is arranged in parallel to a horizontal plane (see Figures 12 and 13).

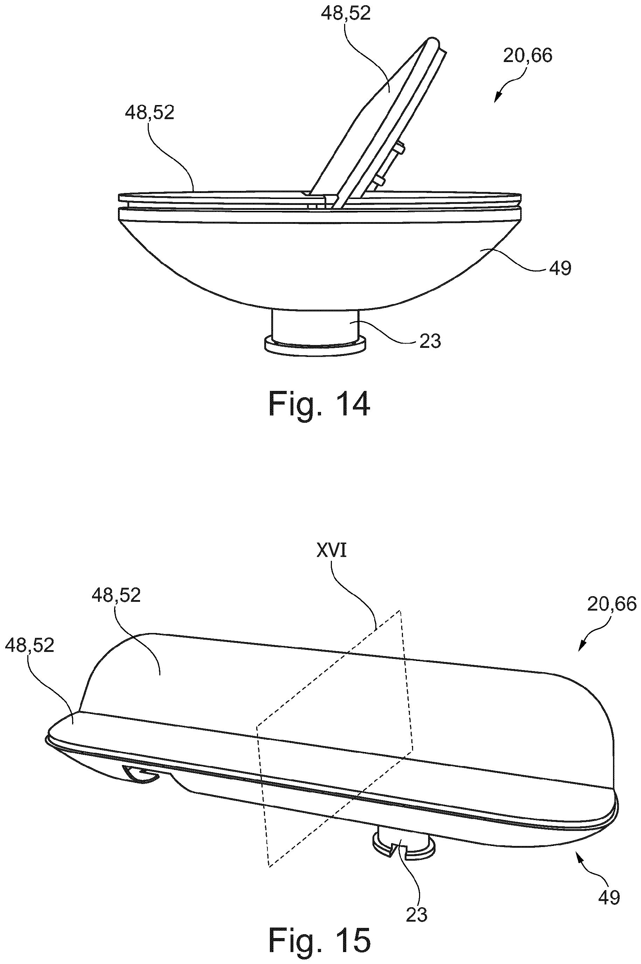

In the driving configuration 66, the portion of the display device 20 has a component of extension in a vertical direction (see Figures 14 and 15). In the present example, one of the display device portions 48 is erected with respect to a horizontal plane.

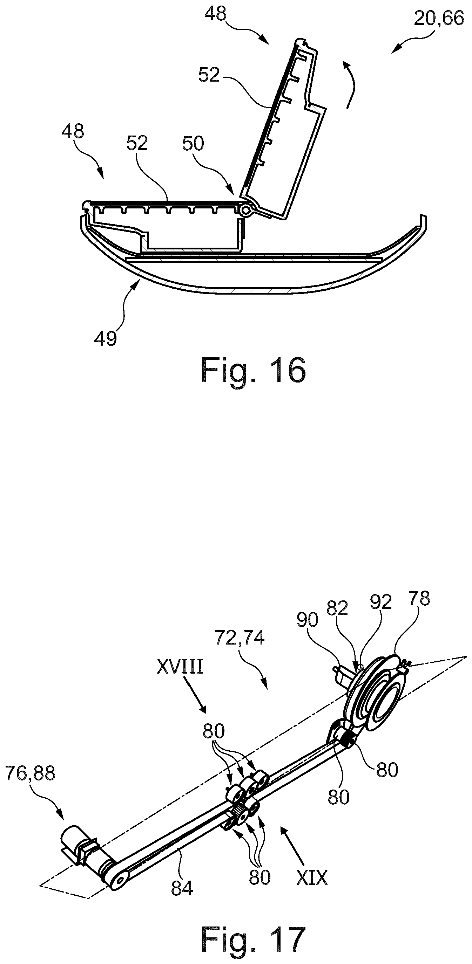

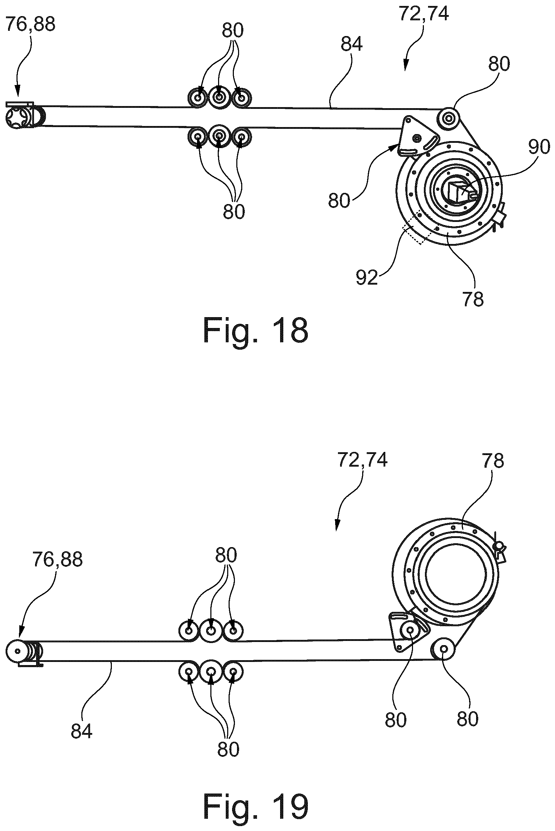

In the following, details of the rotatable platform 16 will be explained in connection with Figures 17 to 19.

The rotatable platform 16 comprises an electric drive unit 72 for selectively rotating the rotatable platform 16.

In more detail, the electric drive unit 72 comprises a belt and pulley system 74.

The belt and pulley system 74 comprises a power source 76 formed by an electric machine.

The power source 76 is drivingly coupled to a driving interface of the rotatable platform 16 via a pulley provided on a drive shaft of the power source 76 and a pulley 78 centrally attached to the driving interface of the rotatable platform 16.

A belt 84 engages both pulleys.

The belt 84 is guided and tensioned using a total of eight guide wheels 80.

The rotatable platform 16 further comprises a platform locking mechanism 92 for selectively blocking a rotation of the platform 16.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: interior assembly
- 14: seating bench
- 16: rotatable platform
- 18: seat device
- 20: display device
- 22: console device
- 23: support arm
- 24: steering device
- 26: floor
- 28: first mounting interface
- 30: second mounting interface
- 31: third mounting interface
- 32: rotating mechanism
- 34: sliding mechanisms
- 36: display device locking mechanism
- 38: lever
- 40: inner tube
- 42: outer tube
- 44: unlocked state
- 46: locking state
- 48: display device portion
- 49: support portion of the display device
- 50: hinge
- 52: touch screen
- 54: top film
- 56: heat sink unit
- 58: back cover
- 60: trim cover
- 62: base plate
- 64: housing
- 66: driving configuration
- 68: table configuration
- 72: electric drive unit
- 74: belt and pulley system
- 76: power source
- 78: pulley
- 80: guiding wheel
- 84: belt
- 88: motor
- 90: connection interface
- 92: platform locking mechanism

- A: forward direction
- B: rearward direction
- C: first direction
- D: second direction
- E: first axis of rotation

## Claims

1. A rotatable platform (16) for an interior of a vehicle (10), the rotatable platform (16) comprising a first mounting interface (28) configured for mounting a seat device (18) on the platform (16) and a second mounting interface (30) configured for mounting a console device (22) on the platform (16).

2. The rotatable platform (16) of claim 1, wherein the platform (16) is rotatable about at least 180 degrees.

3. The rotatable platform (16) of claim 1 or 2, further comprising an electric drive unit (72) for selectively rotating the platform (16).

4. The rotatable platform (16) of any one of the preceding claims, further comprising a platform locking mechanism (92) configured for selectively blocking a rotation of the platform (16).

5. An interior assembly (12) for a vehicle (10), the interior assembly (12) comprising a rotatable platform (16) according to any one of the preceding claims, wherein the rotatable platform (16) forms a portion of a floor (26) of a vehicle interior.

6. The interior assembly (12) of claim 5, wherein at least one seat device (18) is mounted on the platform (16) via the first mounting interface (28) and/or wherein at least one console device (22) is mounted on the platform (16) via the second mounting interface (30).

7. The interior assembly (12) of claim 5 or 6, wherein at least one display device (20) is connected to the platform (16).

8. The interior assembly (12) of claims 6 and 7, wherein the display device (20) is mounted on the console device (22).

9. The interior assembly (12) of claim 8,
wherein the display device (20) is translatorily movable relative to the console device (22) along a first direction (C), wherein the first direction (C) extends substantially parallel to a principal extension of the console device (22) and/or
wherein the display device (20) is translatorily movable relative to the console device (22) along a second direction (D), wherein the second direction (D) extends substantially transversely to a principal extension of the console device (22) and/or
wherein at least a portion of the display device (20) is rotatably movable relative to the console device (22) about a first axis of rotation (E), wherein the first axis of rotation (E) extends substantially vertically and/or
wherein at least a portion of the display device (20) is rotatably movable relative to the console device (22) about a second axis of rotation (F), wherein the second axis of rotation (F) extends substantially transversely to a principal extension of the console device (22) and/or
wherein at least a portion of the display device (20) is rotatably movable relative to the console device (22) about a third axis of rotation (G), wherein the third axis of rotation (G) extends substantially in parallel to a principal extension of the console device (22).

10. The interior assembly (12) of any one of claims 7 to 9, wherein in a driving
configuration (66), at least a portion of the display device (20) has a component (70) of extension in a vertical direction and/or wherein in a table configuration (68), the display device (20) is arranged in parallel to a horizontal plane.

11. The interior assembly (12) of any one of claims 7 to 10, wherein the display device (20) comprises at least two display device portions (48), wherein the at least two display device portions (48) are connected via a hinge (50).

12. The interior assembly (12) of any one of claims 7 to 11, further comprising a display device locking mechanism (36) configured for selectively blocking a movement of the display device (20).

13. The interior assembly (12) of any one of claims 7 to 12, wherein the display device (20) comprises a touch screen (52).

14. The interior assembly (12) of claim 6 or any one of claims 7 to 13, further comprising a steering device (24) mounted on the console device (22) and/or on the display device (20).

15. A vehicle (10) comprising a rotatable platform (16) of any one of claims 1 to 4 and/or an interior assembly (12) of any one of claims 5 to 14.
